# EUROPEAN PATENT APPLICATION

(11) **EP 3 513 904 A2**
(43) Date of publication of application: **24.07.2019**
(21) Application number: 19153088.0
(22) Date of filing: 22.01.2019
(51) Int. Cl.: B23Q 1/00, B23Q 7/14

(54) **CUTTING MACHINE**

(30) Priority: 23.01.2018 JP 2018008643
(71) Applicant: DGSHAPE Corporation, Hamamatsu-shi, Shizuoka 431-2103 (JP)
(72) Inventor: SATO, Ryo, Hamamatsu-shi, Shizuoka 431-2103 (JP); HIROSE, Yuichi, Hamamatsu-shi, Shizuoka 431-2103 (JP)
(74) Representative: Grünecker Patent- und Rechtsanwälte PartG mbB

(57) **Abstract**

A cutting machine 10 according to the present invention includes an adaptor 200 that holds a cutting object 5 and a holder 100 that detachably holds the adaptor 200. A fixing portion 130 of the holder 100 includes a cam member 131, an elastic member 132, and a movable member 133. When the cam member 131 is in a first rotation position P1, the fixing portion 130 fixes the adaptor 200. The cam member 131 is disposed between a fixed portion 213 and an elastic member 132, and the cam member 131 contacts a fixed portion 213 and an elastic member 132 in the first rotation position P1. When the cam member 131 is in the first rotation position P1, the elastic member 132 presses the cam member 131 toward a fixed portion 213. The movable member 133 supports the cam member 131 such that the cam member 132 is movable between the fixed portion 213 and the elastic member 132.

## Description

### BACKGROUND OF THE INVENTION

### Field of the Invention

The present invention relates to a cutting machine.

### Description of the Related Art

A cutting machine known to date produces artificial teeth or other products by a cutting process. For example, Japanese Patent Application Publication No. 2017-94436 discloses a cutting machine including a holding unit that holds a workpiece, a spindle that rotates a processing tool, and a mechanism that moves the holding unit and the spindle in three dimensions. The cutting machine described in Japanese Patent Application Publication No. 2017-94436 is a cutting machine that manually replaces workpieces, and the holding unit is configured to directly hold the workpiece.

An auto work changer known to date can replace workpieces automatically. Japanese Patent Application Publication No. H05-16051, for example, discloses an auto work changer including a pallet stocker that stocks a plurality of adaptors (called as "pallets" in Japanese Patent Application Publication No. H05-16051) carrying workpieces, a work tank including a pallet positioning device, and a conveyor including a slider and a workpiece chucking hand.

An adaptor (pallet) as disclosed in Japanese Patent Application Publication No. H05-16051, for example, is set on a machine with a workpiece fixed, and unless the workpiece is detached from the adaptor, the workpiece can be set at the same location on the workpiece many times. In a cutting machine of such a type that manually replaces workpieces as disclosed in Japanese Patent Application Publication No. 2017-94436, such attachment and detachment of a workpiece using an adaptor are considered to have similar advantages.

The present invention has been made in view of the foregoing circumstances, and has an object of providing a cutting machine that enables an adaptor holding a cutting object to be easily attached and detached manually.

### SUMMARY OF THE INVENTION

A cutting machine disclose here includes an adaptor that holds a cutting object and a holder that detachably holds the adaptor. The adaptor includes a fitted portion and a fixed portion. The holder includes a fitting portion that is fitted in the fitted portion and positions the adaptor and the holder, and a fixing portion. The fixing portion includes a cam member, an elastic member, and a movable member. When the cam member is in a first rotation position in a state where the fitting portion is fitted in the fitted portion, the fixing portion pressing the fixed portion to set the adaptor in a fixed state. In the state where the fitting portion is fitted in the fitted portion, the cam member is located between the fixed portion and the elastic member, and in the first rotation position, contacts the fixed portion and contacts the elastic member to elastically deform the elastic member. When the cam member is in the first rotation position, the elastic member presses the cam member toward the fixed portion. The movable member supports the cam member such that the cam member is movable between the fixed portion and the elastic member.

In the cutting machine, when the cam member is rotated to be set in the first rotation position, an elastic force of the elastic member causes the cam member to be pushed against the fixed portion of the adaptor so that the adaptor can be easily fixed.

### BRIEF DESCRIPTION OF THE DRAWINGS

FIG. 1 is a perspective view of a cutting machine according to one preferred embodiment.
FIG. 2 is a cross-sectional view taken along line II-II in FIG. 1.
FIG. 3 is a perspective view illustrating a configuration of a magazine, a rotation mechanism, and a holder.
FIG. 4 is a plan view illustrating a configuration of an adaptor.
FIG. 5 is a cross-sectional view taken along line V-V in FIG. 4.
FIG. 6 is a plan view illustrating a configuration of a holder.
FIG. 7 is a cross-sectional view taken along line VII-VII in FIG. 6.
FIG. 8 is a perspective view illustrating a first cam member.
FIG. 9 is a plan view illustrating a state where the adaptor is attached to the holder.
FIG. 10 is a cross-sectional view taken along line X-X in FIG. 9.
FIG. 11 is a horizontal cross-sectional view near the first cam member in a state where the adaptor is not fixed to the holder.
FIG. 12 is a horizontal cross-sectional view near the first cam member in a state where the adaptor is fixed to the holder.
FIG. 13 is a view illustrating a state where the adaptor is being engaged with a first guide groove and a second guide groove from above.

### DETAILED DESCRIPTION OF THE PREFERRED EMBODIMENTS

A cutting machine according to a preferred embodiment of the present invention will be described hereinafter with reference to the drawings. The preferred embodiment described here is, of course, not intended to particularly limit the present invention. Elements and features having the same functions are denoted by the same reference numerals, and description for the same members and parts will not be repeated or will be simplified as appropriate.

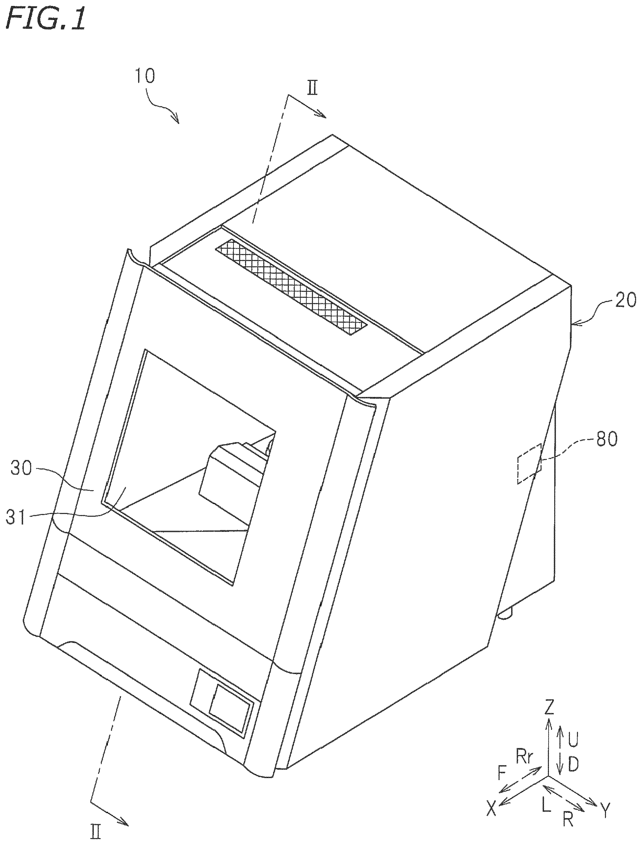

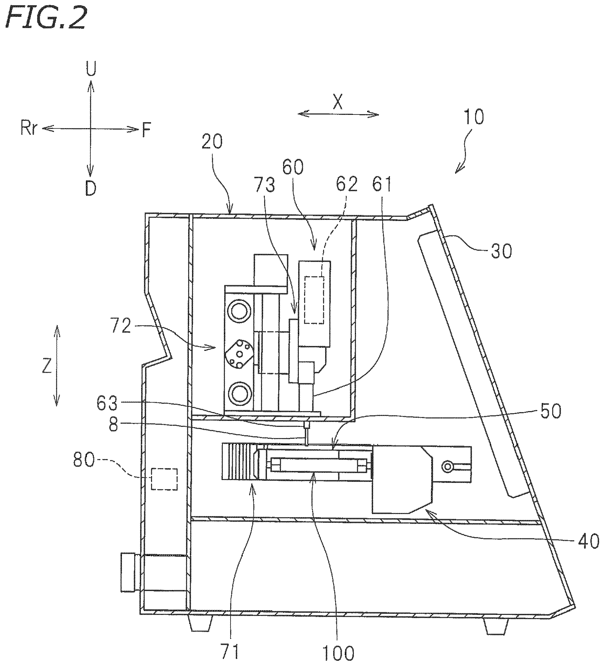

FIG. 1 is a perspective view of a cutting machine 10 according to one preferred embodiment. FIG. 2 illustrates a cross section taken along line II-II in FIG. 1. In the following description, left, right, up, and down respectively refer to left, right, up, and down seen from a user at a door 30 of the cutting machine 10. The direction toward the cutting machine 10 from the user will be hereinafter referred to as rearward, and the opposite direction away from the cutting machine 10 will be hereinafter referred to as forward. Characters F, Rr, L, R, U, and D in the drawings represent front, rear, left, right, up, and down, respectively. Suppose axes orthogonal to one another are an X axis, a Y axis, and a Z axis, the cutting machine 10 according to this preferred embodiment is placed on a plane defined by the X axis and the Y axis. Here, the X axis extends forward and rearward (longitudinally). The Y axis extends leftward and rightward (laterally). The Z axis extends upward and downward (vertically). It should be noted that these directions are defined simply for convenience of description, and do not limit the state of installation of the cutting machine 10.

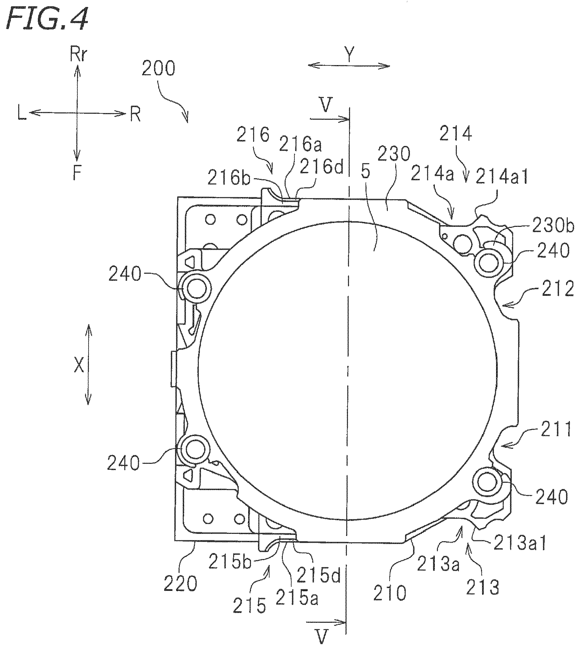

As illustrated in FIG. 1, the cutting machine 10 has a box shape. The cutting machine 10 according to this preferred embodiment includes a casing 20 and a door 30. The casing 20 houses a holder 100 for holding an adaptor 200 (see FIG. 4), and a main shaft 60 for rotating a tool 8 (see FIG. 2 for both). The casing 20 has a box shape having an opening in the front surface. The casing 20 is formed by combining steel sheets, for example.

The opening of the casing 20 is provided with the door 30. The door 30 is attached to the opening to be slidable vertically. The vertical sliding of the door 30 allows the inside and the outside of the casing 20 to communicate with each other through the opening at the front of the casing 20. Although the door 30 slides vertically to be thereby opened and closed, the door 30 may take various form such as a form in which the door 30 is opened laterally, for example. The door 30 has a window 31 through which the inside of the casing 20 can be visually recognized.

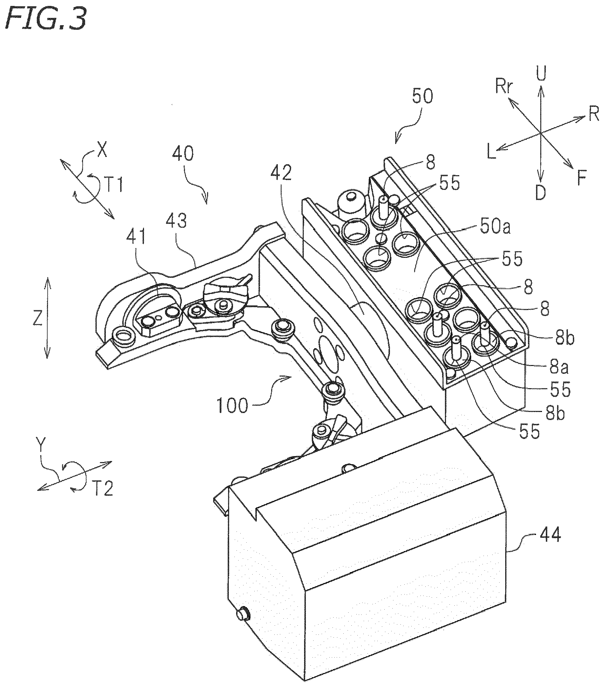

As illustrated in FIG. 2, the casing 20 accommodates a rotation mechanism 40, a magazine 50, the main shaft 60, the holder 100, an X-axis movement mechanism 71, a Y-axis movement mechanism 72, and a Z-axis movement mechanism 73. FIG. 3 is a perspective view illustrating a configuration of the rotation mechanism 40, the magazine 50, and the holder 100. As illustrated in FIG. 3, in this preferred embodiment, the holder 100 for holding a cutting object 5 by holding the adaptor 200, the rotation mechanism 40 for rotating the holder 100, and the magazine 50 for housing rod-shaped tools 8 are integrally assembled.

The holder 100 detachably holds the adaptor 200. The adaptor 200 holds the cutting object 5. The holder 100 and the adaptor 200 will be described later in detail.

The rotation mechanism 40 supports the holder 100. The rotation mechanism 40 includes a first rotation shaft 41, a second rotation shaft 42, a support member 43, a first driver 44, and an unillustrated second driver. As illustrated in FIG. 3, the first rotation shaft 41 rotatably supports the holder 100 longitudinally. The first rotation shaft 41 is connected to the first driver 44 disposed ahead of the holder 100. The first driver 44 is, but not limited to, a motor, for example. The first driver 44 rotates the first rotation shaft 41 in a direction T1 about the X axis. Driving of the first driver 44 causes the holder 100 to rotate in the direction T1. The first rotation shaft 41 and the first driver 44 are supported by the support member 43. The second rotation shaft 42 is connected to a longitudinal center portion of the support member 43. The support member 43 is supported by the second rotation shaft 42. The second rotation shaft 42 is connected to the unillustrated second driver. The second driver is driven to cause the second rotation shaft 42 to rotate the support member 43 in a direction T2 about the Y axis. The rotation of the support member 43 in the direction T2 causes the holder 100 to rotate in the direction T2.

As illustrated in FIG. 3, the magazine 50 supports the holder 100 with the second rotation shaft 42 and the support member 43 of the rotation mechanism 40 interposed therebetween. The magazine 50 has a box shape. An upper surface 50a of the magazine 50 has a plurality of hole-shaped stockers 55. Each stocker 55 houses the tool 8. In this preferred embodiment, the tool 8 is inserted in the stocker 55 with a gripped portion 8a of the tool 8 being exposed. Since the magazine 50 includes the plurality of stockers 55, the magazine 50 can house a variety of tools 8. In this preferred embodiment, the magazine 50 includes ten stockers 55. The ten stockers 55 are arranged in the magazine 50 such that five stockers 55 are arranged along the X axis and two lines of stockers 55 are arranged along the Y axis.

The magazine 50 is fixed to the X-axis movement mechanism 71 (not shown in FIG. 3, see FIG. 2) disposed at the right. The X-axis movement mechanism 71 is not limited to a specific configuration, and includes a motor and a feed screw mechanism, for example. The X-axis movement mechanism 71 is connected to a controller 80 and controlled by the controller 80. The holder 100 moves along the X axis integrally with the magazine 50 by driving the X-axis movement mechanism 71. At this time, the adaptor 200 held by the holder 100 and the cutting object 5 held by the adaptor 200 also move along the X axis together with the holder 100.

The tools 8 are tools for cutting the cutting object 5. In this embodiment, the rod-shaped tools 8 are used. As illustrated in FIG. 3, each tool 8 has a flange 8b. The flange 8b herein has a shape corresponding to the shape of the hole-shaped stocker 55. When the tool 8 is housed in the stocker 55, the flange 8b is fitted in the stocker 55. As illustrated in FIG. 3, in a state where the tool 8 is placed in the stocker 55, the gripped portion 8a located above the flange 8b projects from the stocker 55. The gripped portion 8a is gripped by the main shaft 60. An unillustrated cutter portion is provided below the flange 8b of the tool 8. In this preferred embodiment, some tools 8 have various shapes of cutter portions. When the main shaft 60 rotates about the Z axis while gripping the tool 8, the tool 8 rotates about the Z axis accordingly. A cutting process is performed on cutting object 5 by contact of the cutter portion of the rotating tool 8 with the cutting object 5.

The main shaft 60 rotates the tool 8 while gripping the tool 8. As illustrated in FIG. 2, the main shaft 60 includes a spindle 61 and a driver 62, and the spindle 61 includes a gripping portion 63. The spindle 61 rotates about the Z axis. The gripping portion 63 is disposed at the lower end of the spindle 61, and rotation of the spindle 61 causes the gripping portion 63 to rotate about the Z axis. The driver 62 rotates the spindle 61.

The gripping portion 63 grips the tool 8. The gripping portion 63 is disposed at the lower end of the spindle 61. The gripping portion 63 sandwiches the gripped portion 8a of the tool 8 with a chuck divided into a plurality of collets, for example, to thereby grip the tool 8. The chuck is not limited to a specific mechanism, and includes an electric motor, for example. The chuck is controlled by the controller 80. The tool 8 rotates about the Z axis by rotation of the spindle 61 while being gripped by the gripping portion 63.

The driver 62 rotates the spindle 61. The driver 62 is a motor, for example. The driver 62 is connected to the controller 80 and controlled by the controller 80. The driver 62 rotates the spindle 61 at a specified timing and a specified number of revolutions by control of the controller 80. The driver 62 and the spindle 61 are connected to each other by, for example, an endless belt.

As illustrated in FIG. 2, the main shaft 60 is moved along the Y axis and the Z axis by the Y-axis movement mechanism 72 and the Z-axis movement mechanism 73, respectively. Each of the Y-axis movement mechanism 72 and the Z-axis movement mechanism 73 is not limited to a specific configuration, and includes a motor and a feed screw mechanism, for example. Each of the Y-axis movement mechanism 72 and the Z-axis movement mechanism 73 is connected to the controller 80 and controlled by the controller 80. The main shaft 60 is moved along the Y axis and the Z axis by driving of the Y-axis movement mechanism 72 and the Z-axis movement mechanism 73, respectively. At this time, the tool 8 gripped by the gripping portion 63 is also moved along the Y axis and the Z axis together with the main shaft 60.

The controller 80 is connected to the driver 62 and the gripping portion 63 of the main shaft 60, the first driver 44 and the second driver of the rotation mechanism 40, the X-axis movement mechanism 71, the Y-axis movement mechanism 72, and the Z-axis movement mechanism 73, and controls movement of these components. The controller 80 is not limited to a specific configuration. The controller 80 is, for example, a microcomputer. The microcomputer is not limited to a specific hardware configuration, and includes, for example, an interface (I/F) that receives cutting data or others from an external device such as a host computer, a central processing unit (CPU) that executes an instruction of a control program, a read only memory (ROM) that stores a program to be executed by the CPU, a random access memory (RAM) that is used as a working area in which the program is expanded, and a memory device such as a memory that stores the program and various types of data.

In the cutting machine 10 according to this preferred embodiment, after the adaptor 200 holding the cutting object 5 is set on the holder 100 by a user, a cutting process is performed in the following manner, for example. First, the cutting machine 10 selects a tool 8. The controller 80 controls the X-axis movement mechanism 71 and the Y-axis movement mechanism 72, and moves the main shaft 60 to a position above the stocker 55 housing the selected tool 8. The controller 80 also controls the Z-axis movement mechanism 73 and the gripping portion 63 to cause the gripping portion 63 to grip the selected tool 8. Next, the controller 80 controls the X-axis movement mechanism 71, the Y-axis movement mechanism 72, and the Z-axis movement mechanism 73 to dispose the tool 8 and the adaptor 200 at specified positions, and controls the rotation mechanism 40 to set the adaptor 200 in a specified position. The controller 80 controls the driver 62 of the main shaft 60 such that the driver 62 rotates the spindle 61 at a specified number of revolutions. Thereafter, a cutting process is continuously or intermittently performed with a change in the positional relationship between the adaptor 200 and the tool 8 and a change in the posture of the adaptor 200 (and the revolution speed of the spindle 61 in some cases). At some point of the cutting process, the tool 8 is changed to a specified tool, and the cutting process on one cutting object 5 is finished.

As described above, the cutting machine 10 according to this preferred embodiment employs a system in which the cutting object 5 is set on the adaptor 200 and the adaptor 200 is set on the holder 100. An advantage obtained by performing setting of the cutting object 5 on the cutting machine 10 with interposition of the adaptor 200 is that even when the cutting process is once interrupted and the adaptor 200 is detached from the cutting machine 10, the cutting object 5 can be attached to the same location of the cutting machine 10 unless the cutting object 5 is detached from the adaptor 200. The adaptor 200 and the holder 100 are configured to be attached with reproducibility. By attaching the adaptor 200 to the same location again after detachment, the cutting location does not shift after the second attachment and the process can be continued. In another case, the remaining part of the cutting process can be performed with another cutting machine using the same adaptor. The cutting machine 10 according to this preferred embodiment is configured to easily attach and detach the adaptor 200.

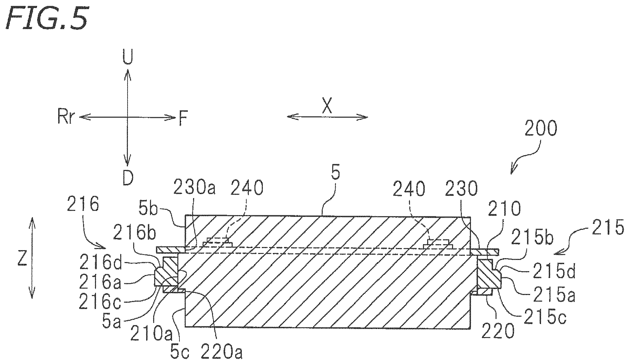

FIG. 4 is a plan view illustrating a configuration of the adaptor 200 holding the cutting object 5. FIG. 5 is a cross-sectional view taken along line V-V in FIG. 4. FIG. 5 is a cross-sectional view of a cross section perpendicular to the Y axis (left-right direction or lateral direction). The adaptor 200 holds the cutting object 5. As illustrated in FIG. 4, in this preferred embodiment, the cutting object 5 has a disc shape. The cutting object 5 is not limited to a specific shape, and may be rectangular. The cutting object 5 is made of various materials such as zirconia, wax, polymethyl methacrylate resin (PMMA), hybrid resin, polyether ether ketone resin (PEEK), and gypsum. The cutting object 5, however, is not limited to a specific material.

The adaptor 200 according to this preferred embodiment has a flat shape.. The adaptor 200 includes a frame 210, a bottom plate 220, a retainer 230, and screws 240. The adaptor 200 sandwiches the cutting object 5 between the bottom plate 220 and the retainer 230, and the retainer 230 and the frame 210 joined to the bottom plate 220 are fixed by the screws 240, thereby holding the cutting object 5. As illustrated in FIG. 5, the cutting object 5 includes a body 5a, and a first projection 5b and a second projection 5c whose diameters are smaller than that of the body 5a. The first projection 5b is disposed above the body 5a, and constitutes an upper portion of the cutting object 5. The second projection 5c is disposed below the body 5a, and constitutes a lower portion of the cutting object 5. The first projection 5b and the second projection 5c have the same shape, and the cutting object 5 are symmetric vertically. The frame 210 has a flat plate shape, and has a circular through hole 210a slightly larger than the body 5a of the cutting object 5. The through hole 210a penetrates the frame 210 vertically. The frame 210 is made of, for example, plastic. The bottom plate 220 is disposed below the frame 210. The bottom plate 220 has a flat shape and contacts the lower surface of the frame 210. The bottom plate 220 constitutes a bottom portion of the adaptor 200. The bottom plate 220 is made of, for example, a stainless plate. The bottom plate 220 has the circular through hole 220a penetrating the bottom plate 220 vertically. The through hole 220a has a diameter slightly larger than the second projection 5c of the cutting object 5. As illustrated in FIG. 5, when the cutting object 5 is attached to the adaptor 200, the second projection 5c is inserted in the through hole 220a of the bottom plate 220 so that the cutting object 5 is positioned.

The retainer 230 has a thin plate shape and is made of, for example, a stainless plate. The retainer 230 includes a circular through hole 230a slightly larger than the first projection 5b of the cutting object 5. Thus, when the retainer 230 is placed on the cutting object 5, the first projection 5b projects upward from the through hole 230a and the retainer 230 overlies the upper surface of the body 5a. The retainer 230 and the frame 210 are fixed to each other by four screws 240 in this embodiment. The retainer 230 has hooks 230b retained by the heads of the screws 240. When the screws 240 are tightened, the hooks 230b are pushed downward by the heads of the screws 240. When the screws 240 are loosened, the retainer 230 becomes rotatable. When the retainer 230 are rotated clockwise when seen from above with the screws 240 loosened, the hooks 230b moves from below the screws 240. Accordingly, the retainer 230 can be detached from the frame 210. In this manner, the retainer 230 can be attached and detached to/from the frame 210 only by loosening the four screws 240. The frame 210 has four screw holes (not shown) in which the screws 240 are screwed.

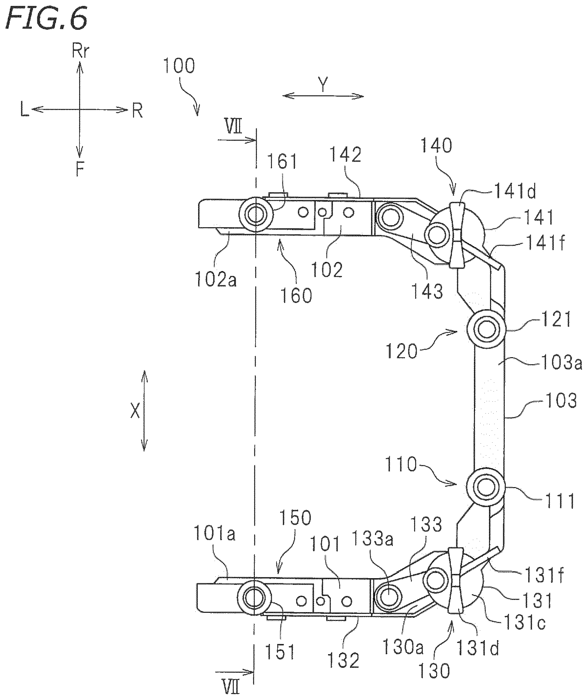

As illustrated in FIG. 4, the frame 210 has a first fitted portion 211, a second fitted portion 212, a first fixed portion 213, and a second fixed portion 214. The first fitted portion 211 and the second fitted portion 212 are portions in which a first fitting portion 110 and a second fitting portion 120 (see FIG. 6 for both) of the holder 100 described later are fitted respectively and which are used for positioning the adaptor 200 and the holder 100. The first fitted portion 211 and the second fitted portion 212 are recesses formed on the right side surface of the frame 210. As illustrated in FIG. 4, the first fitted portion 211 is disposed at a front portion of the right side surface of the frame 210. The second fitted portion 212 is disposed behind the first fitted portion 211 on the right side surface of the frame 210. The first fitted portion 211 and the second fitted portion 212 are symmetric about the center line of the frame 210 extending laterally. The retainer 230 also has two recesses corresponding to the first fitted portion 211 and the second fitted portion 212. These two recesses prevent the retainer 230 from overlapping the first fitted portion 211 and the second fitted portion 212 in plan view.

The first fixed portion 213 and the second fixed portion 214 receive pressing forces from a first fixing portion 130 and a second fixing portion 140 (see FIG. 6 for both) of the holder 100 when the adaptor 200 is set on the holder 100. With the pressing forces, the adaptor 200 and the holder 100 are fixed to each other. The first fixed portion 213 has a first recess 213a formed in the front side surface of the frame 210. The second fixed portion 214 has a second recess 214a formed in a rear side surface of the frame 210. The first recess 213a has a first pressed surface 213a1 facing left-forward. The second recess 214a has a second pressed surface 214a1 facing left-rearward. The first fixed portion 213 and the second fixed portion 214 are symmetric about the center line of the frame 210 extending laterally, and have symmetric shapes.

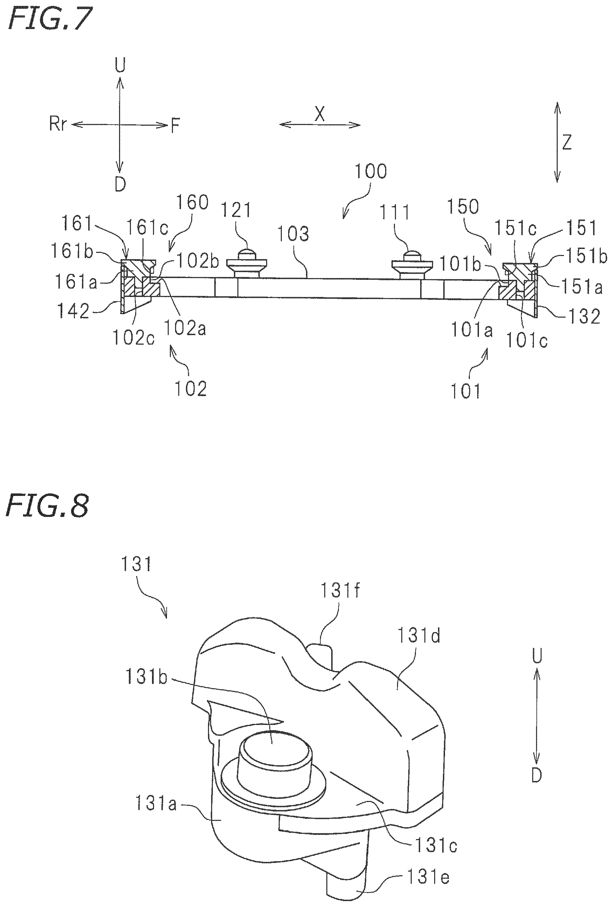

As illustrated in FIG. 5, the frame 210 includes a first guide projection 215 and a second guide projection 216. The first guide projection 215 is a projection that is engaged with a first guide groove 150 (see FIG. 7) of the holder 100 described later. The first guide projection 215 is disposed on the front side surface of the frame 210 and projects forward. The first guide projection 215 has a substantially rectangular parallelepiped shape, and includes a first outer side surface 215a facing forward, a first upper side surface 215b facing upward, and a first lower surface 215c facing downward. As illustrated in FIG. 4, the first outer side surface 215a, the first upper side surface 215b, and the first lower surface 215c have the same lateral length (where the first lower surface 215c is not shown in FIG. 4). The first guide projection 215 is a projection in which the first upper side surface 215b is the upper surface and the first lower surface 215c is the lower surface. The second guide projection 216 is a projection that is engaged with a second guide groove 160 (see FIG. 7) of the holder 100. The second guide projection 216 is formed on the rear side surface of the frame 210 and projects rearward. The second guide projection 216 also has a substantially rectangular parallelepiped shape, and includes a second outer side surface 216a facing rearward, a second upper side surface 216b facing upward, and a second lower surface 216c facing downward. As illustrated in FIG. 4, the second outer side surface 216a, the second upper side surface 216b, and the second lower surface 216c have the same lateral length (where the second lower surface 216c is not shown in FIG. 4). The second guide projection 216 is a projection in which the second upper side surface 216b is the upper surface and the second lower surface 216c is the lower surface. The first guide projection 215 and the second guide projection 216 are symmetric about the center line of the adaptor 200 extending laterally.

As illustrated in FIG. 5, in the first guide projection 215, a first chamfering 215d is provided to a side at which the first outer side surface 215a and the first upper side surface 215b are connected, that is, to the upper edge of the first outer side surface 215a. Similarly, in the second guide projection 216, a second chamfering 216d is provided to a side at which the second outer side surface 216a and the second upper side surface 216b are connected, that is, to the upper edge of the second outer side surface 216a. Each of the first chamfering 215d and the second chamfering 216d is at about 30 degrees with respect to the horizontal plane in FIG. 5, but may be at any appropriate angle. Each of the first chamfering 215d and the second chamfering 216d is not limited to a chamfering by one plane, and may be a chamfering by a curved plane or a refraction plane, for example.

FIG. 6 is a plan view illustrating a configuration of the holder 100. The holder 100 detachably holds the adaptor 200. The holder 100 includes a first arm 101, a second arm 102, and a coupling portion 103. As illustrated in FIG. 6, the first arm 101 extends laterally. The second arm 102 extends laterally in parallel with the first arm 101. The first arm 101 is parallel to the second arm 102. The second arm 102 is disposed behind the first arm 101. The coupling portion 103 couples the first arm 101 and the second arm 102 to each other. The coupling portion 103 extends longitudinally. The coupling portion 103 is orthogonal to the first arm 101 and the second arm 102. The front end of the coupling portion 103 is connected to the right end of the first arm 101, and the rear end of the coupling portion 103 is connected to the right end of the second arm 102. In this embodiment, the first arm 101, the second arm 102, and the coupling portion 103 are integrally formed, and constitute a body of the holder 100. Alternatively, the first arm 101, the second arm 102, and the coupling portion 103 may be formed as separate components and before being joined together. The first arm 101, the second arm 102, and the coupling portion 103 are made of, for example, stainless. In this embodiment, the first arm 101 and the second arm 102 are symmetric about the center line of the holder 100 extending laterally. That is, the first arm 101 and the second arm 102 are identical except that the first arm 101 and the second arm 102 are opposite to each other longitudinally.

The first arm 101 and the second arm 102 bend toward the coupling portion 103 near the coupling portion 103 (near the right end). Specifically, the first arm 101 bends rearward near the right end. The second arm 102 bends forward near the right end.

FIG. 7 is a cross-sectional view taken along line VII-VII in FIG. 6. As illustrated in FIG. 7, the first arm 101 includes a first guide groove 150 that is engaged with the first guide projection 215 of the adaptor 200. FIG. 7 is a cross-sectional view of a cross section perpendicular to the Y axis direction (left-right direction or lateral direction). As illustrated in FIG. 7, the first guide groove 150 is formed by a first mount surface 101a and a first vertical surface 101b of the first arm 101 and a first guide pin 151. The first mount surface 101a is a plane formed at the upper surface of the first arm 101. The first mount surface 101a is one of surfaces on which the adaptor 200 is mounted when the adaptor 200 is attached to the holder 100. The first lower surface 215c of the first guide projection 215 of the adaptor 200 is mounted on the first mount surface 101a, which will be specifically described later. The first mount surface 101a constitutes the bottom surface of the first guide groove 150. The first vertical surface 101b is connected to the outer side (front side) of the first mount surface 101a. The first vertical surface 101b corresponds to the first outer side surface 215a of the first guide projection 215 of the adaptor 200 when the adaptor 200 is attached to the holder 100. The first vertical surface 101b constitutes a part of a side surface of the first guide groove 150. The first guide pin 151 is placed on a horizontal plane connected to the outer side (front side) of the first vertical surface 101b and at a higher level than the first mount surface 101a. The first guide pin 151 is inserted in an attachment hole 101c formed in the horizontal plane. The first guide pin 151 includes a shaft portion 151a and a head 151b. The first guide pin 151 has a stepped cylindrical shape as illustrated in FIGS. 6 and 7, and the outer diameter of the head 151b is larger than the outer diameter of the shaft portion 151a. In this embodiment, a portion of the side surface of the shaft portion 151a closest to the second arm 102 is flush with the first vertical surface 101b. The shaft portion 151a is connected to an upper portion of the first vertical surface 101b to partially constitute the side surface of the first guide groove 150. The head 151b is connected to an upper portion of the shaft portion 151a. The lower surface of the head 151b of the first guide pin 151 is a first tapered surface 151c. The angle of the first tapered surface 151c corresponds to the angle of the first chamfering 215d formed on the first guide projection 215 of the adaptor 200. The first tapered surface 151c of the first guide pin 151 constitutes the top surface of the first guide groove 150. In the manner described above, the first guide groove 150 is configured such that the first mount surface 101a is the lower edge, and the upper edge of the first tapered surface 151c is the upper edge. The function of the first guide pin 151 is not necessarily achieved by the pin-shaped member, and may be achieved by an angular member or a cutting process performed on the first arm 101.

The second arm 102 also includes the second guide groove 160 that is engaged with the second guide projection 216 of the adaptor 200. The configuration of the second guide groove 160 is similar to the configuration of the first guide groove 150. That is, the second guide groove 160 is formed by the second mount surface 102a and the second vertical surface 102b of the second arm 102 and a second guide pin 161. When the adaptor 200 is attached to the holder 100, the second lower surface 216c of the second guide projection 216 of the adaptor 200 is mounted on the second mount surface 102a. The second vertical surface 102b is connected to an outer side (rear side) of the second mount surface 102a. When the adaptor 200 is attached to the holder 100, the second vertical surface 102b corresponds to the second outer side surface 216a of the second guide projection 216 of the adaptor 200. The second guide pin 161 is disposed on a horizontal plane connected to an upper portion of the second vertical surface 102b. The second guide pin 161 is inserted in the attachment hole 102c. The second guide pin 161 also includes a shaft portion 161a and a head 161b. The second guide pin 161 has a stepped cylindrical shape as illustrated in FIGS. 6 and 7, and the outer diameter of the head 161b is larger than the outer diameter of the shaft portion 161a. A portion of the side surface of the shaft portion 161a closest to the first arm 101 is flush with the second vertical surface 102b. That is, the shaft portion 161a is connected to an upper portion of the second vertical surface 102b to partially constitute the side surface of the second guide groove 160. The head 161b is connected to an upper portion of the shaft portion 161a. The lower surface of the head 161b of the second guide pin 161 is a second tapered surface 161c. The angle of the second tapered surface 161c corresponds to the angle of the second chamfering 216d formed on the second guide projection 216 of the adaptor 200. The second tapered surface 161c of the second guide pin 161 constitutes the top surface of the second guide groove 160. In the manner described above, the second guide groove 160 is configured such that the second mount surface 102a is the lower edge, and the upper edge of the second tapered surface 161c is the upper edge.

As described above, the first arm 101 includes the first guide groove 150 extending laterally. The second arm 102 includes the second guide groove 160 extending laterally. Each of the first guide groove 150 and the second guide groove 160 is formed to face the inside of the holder 100. In other words, the first guide groove 150 faces toward the second arm 102. The second guide groove 160 faces toward the first arm 101. The first guide groove 150 and the second guide groove 160 face each other.

As illustrated in FIG. 6, the holder 100 includes the first fitting portion 110, the second fitting portion 120, the first fixing portion 130, and the second fixing portion 140. The first fitting portion 110 is fitted in the first fitted portion 211 of the adaptor 200 for positioning of the adaptor 200 and the holder 100. The second fitting portion 120 is fitted in the second fitted portion 212 of the adaptor 200 for positioning of the adaptor 200 and the holder 100. The first fixing portion 130 presses the first fixed portion 213 of the adaptor 200 to fix the adaptor 200. The second fixing portion 140 presses the second fixed portion 214 of the adaptor 200 to fix the adaptor 200.

The first fitting portion 110 and the second fitting portion 120 are provided in the coupling portion 103. The first fitting portion 110 is configured to be fitted in the first fitted portion 211 of the adaptor 200 when the adaptor 200 is engaged with the first guide groove 150 and the second guide groove 160 to contact the coupling portion 103. The second fitting portion 120 is configured to be fitted in the second fitted portion 212 of the adaptor 200 when the adaptor 200 is engaged with the first guide groove 150 and the second guide groove 160 to contact the coupling portion 103. The first fitting portion 110 is disposed ahead of the coupling portion 103. The first fitting portion 110 is constituted by a first positioning pin 111 and a mount surface 103a. The mount surface 103a is one of surfaces on which the adaptor 200 is mounted when the adaptor 200 is attached to the holder 100. The first positioning pin 111 has a stepped cylindrical head, and is attached to an unillustrated attachment hole formed in the mount surface 103a. The head of the first positioning pin 111 projects upward from the mount surface 103a. The second fitting portion 120 is disposed behind the coupling portion 103. The second fitting portion 120 is configured to be symmetric with respect to the first fitting portion 110 about the center line of the coupling portion 103 extending laterally, and has a configuration similar to that of the first fitting portion 110. That is, the second fitting portion 120 includes a second positioning pin 121 having a stepped cylindrical head.

The first fixing portion 130 is provided in the first arm 101. The first fixing portion 130 fixes the adaptor 200 in a state where the first fitting portion 110 is fitted in the first fitted portion 211 and the second fitting portion 120 is fitted in the second fitted portion 212. The first fixing portion 130 includes a first cam member 131, a first elastic member 132, and a first swing member 133. FIG. 8 is a perspective view of the first cam member 131. As illustrated in FIG. 8, the first cam member 131 includes a cam 131a, a rotation shaft 131b, an operation portion 131c, a lever 131d, a pin 131e, and a stopper 131f. The first cam member 131 is integrally formed of, for example, plastic, except for the rotation shaft 131b.

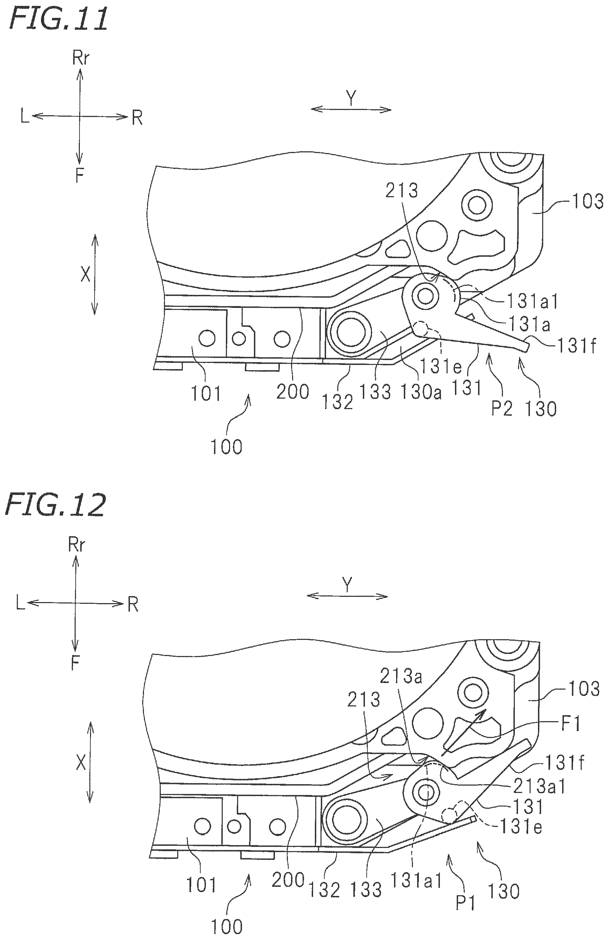

The rotation shaft 131b is a portion about which the first cam member 131 rotates. The rotation shaft 131b extends vertically. Thus, the first cam member 131 is allowed to rotate horizontally about the rotation shaft 131b. The cam 131a has a cam shape whose axis is deviated from the rotation shaft 131b in a horizontal cross section. The cam 131a includes a first contact portion 131a1 (see FIG. 11) that contacts the first fixed portion 213 of the adaptor 200 at a predetermined first rotation position. The first contact portion 131a1 is a convex planar shape. The shape and the rotation position of the cam 131a will be described later.

The operation portion 131c is a portion for a user to operate the first cam member 131, and is disposed above the adaptor 200. Accordingly, the user can operate the first cam member 131 even while the adaptor 200 is attached to the holder 100. The operation portion 131c is connected to an upper portion of the cam 131a. The operation portion 131c has a disc shape, and is coaxial with the rotation shaft 131b. The lever 131d is formed at the upper surface of the operation portion 131c. The lever 131d is configured to be gripped by the user when the user rotates the first cam member 131. In fixing the adaptor 200 to the holder 100, the user can grip the lever 131d to rotate the first cam member 131. The lever 131d has a shape of a notch that intersects the operation portion 131c. The lever 131d, however, is not limited to such a shape.

The pin 131e extends downward from the lower surface of the cam 131a. The pin 131e is a slender columnar portion extending vertically. The location at which the pin 131e is connected to the lower surface of the cam 131a is shifted from the location of the rotation shaft 131b. Thus, the pin 131e also rotates with rotation of the first cam member 131. When the first cam member 131 is located in the first rotation position described above, the pin 131e contacts the first elastic member 132 and elastically deforms the first elastic member 132. At this time, the first cam member 131 receives an elastic force from the first elastic member 132. While the first cam member 131 is at a location other than the first position, the pin 131e receives a relatively small elastic force from the first elastic member 132. Consequently, movement of the first cam member 131 is restricted. A relationship between the pin 131e and the first elastic member 132 will be described later.

The stopper 131f extends at a side of the cam 131a and the operation portion 131c. The stopper 131f is an arm-like potion extending horizontally. The stopper 131f defines the first rotation position. That is, the rotation position at which the stopper 131f contacts the adaptor 200 is the first rotation position of the first cam member 131. This will be also described in detail later.

The first elastic member 132 applies an elastic force to the first cam member 131. Specifically, as described above, the first elastic member 132 applies an elastic force to the pin 131e of the first cam member 131. As illustrated in FIG. 6, the first elastic member 132 is located outside (ahead of) the first cam member 131. The first elastic member 132 is a leaf spring in this embodiment. More specifically, the first elastic member 132 is a flat leaf spring having one longer side, and is fixed to the front side surface of the first arm 101 with the planar surfaces thereof oriented longitudinally. The longer side of the first elastic member 132 extends laterally. The first elastic member 132 is screwed to the front side surface of the first arm 101 near the left end. The first elastic member 132 bends rearward slightly at the right of the bent portion of the first arm 101. That is, the first elastic member 132 bends to the same direction of the first arm 101. Thus, a gap 130a is formed between the inner side (rear side) of the first elastic member 132 and the outer side surface (front side surface) of the first arm 101 at the right of the bent portion of the first arm 101. The pin 131e is inserted in the gap 130a. The pin 131e is sandwiched between the front side surface of the first arm 101 and the first elastic member 132. The first elastic member 132 is a leaf spring in this embodiment, but is not limited to the leaf spring. The mechanism in which the first elastic member 132 applies an elastic force to the first cam member 131 is not limited to the embodiment described above.

The first swing member 133 movably supports the first cam member 131. The first swing member 133 is a flat plate member having a right end supporting the first cam member 131 and a left end rotatably supported. The first swing member 133 is made of, for example, a stainless plate. As illustrated in FIG. 6, the rotation shaft 131b of the first cam member 131 is supported near the right end of the first swing member 133. The first swing member 133 supports the rotation shaft 131b from below. A portion of the first swing member 133 near the left end thereof is rotatably held on the upper surface of the first arm 101 by the rotation shaft 133a. Accordingly, the first swing member 133 can swing the first cam member 131 horizontally about the rotation shaft 133a.

The second fixing portion 140 of the second arm 102 has a configuration similar to that of the first fixing portion 130. That is, the second fixing portion 140 includes the second cam member 141, the second elastic member 142, and the second swing member 143.

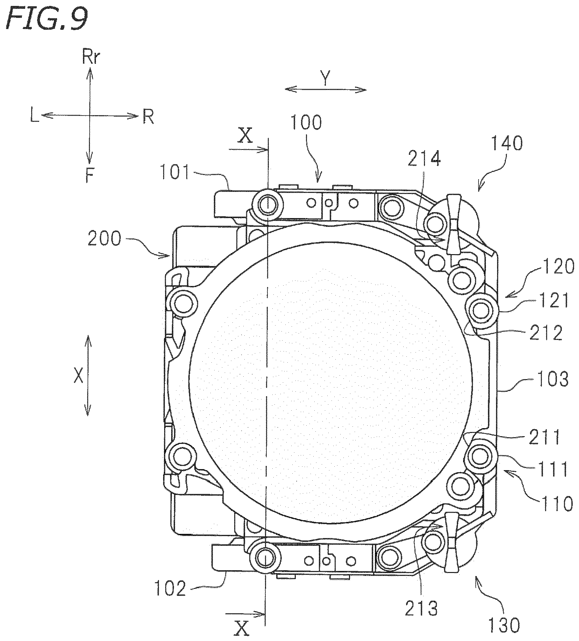

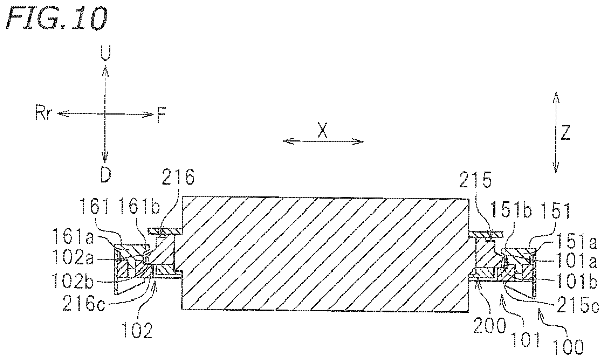

FIG. 9 is a plan view illustrating a state where the adaptor 200 is attached to the holder 100. FIG. 10 is a cross-sectional view taken along line X-X in FIG. 9. FIG. 10 is a cross-sectional view of a cross section perpendicular to the Y axis direction (left-right direction or lateral direction). As illustrated in FIGS. 9 and 10, the adaptor 200 is configured to be engaged with the first guide groove 150 and the second guide groove 160 and movable laterally, and when the adaptor 200 contacts the coupling portion 103, the attachment position to the holder 100 is determined. More specifically, the adaptor 200 is engaged with the first guide groove 150 and the second guide groove 160 while being inserted between the first arm 101 and the second arm 102. As illustrated in FIG. 9, in the attached state, the first fitting portion 110 of the holder 100 is fitted in the first fitted portion 211 of the adaptor 200. More specifically, the first positioning pin 111 of the first fitting portion 110 contacts the recessed first fitted portion 211. In the attached state, the second fitting portion 120 of the holder 100 is fitted in the second fitted portion 212 of the adaptor 200. More specifically, the second positioning pin 121 of the second fitting portion 120 contacts the recessed second fitted portion 212. The first fitted portion 211 and the second fitted portion 212 are provided in the side surface (right side surface) toward the coupling portion 103 of the adaptor 200, and the first fitting portion 110 and the second fitting portion 120 are provided in the coupling portion 103.

The adaptor 200 is slidably engaged with the holder 100 by engagement of the first guide projection 215 with the first guide groove 150 and engagement of the second guide projection 216 with the second guide groove 160. As illustrated in FIG. 10, at this time, the first lower surface 215c of the first guide projection 215 slides on the first mount surface 101a of the first arm 101. The first mount surface 101a of the first arm 101 restricts downward movement of the adaptor 200. The first vertical surface 101b and the shaft portion 151a of the first guide pin 151 are present outside (ahead of) the first guide projection 215, and thus, the first guide projection 215 cannot move to the outside of the first vertical surface 101b and the shaft portion 151a of the first guide pin 151. The first vertical surface 101b and the shaft portion 151a of the first guide pin 151 restrict forward movement of the adaptor 200. The head 151b of the first guide pin 151 is present above the first guide projection 215, and thus, the first guide projection 215 cannot move to a position above the head 151b of the first guide pin 151. The head 151b of the first guide pin 151 restricts upward movement of the adaptor 200. Similarly, in the second arm 102, the second lower surface 216c of the second guide projection 216 slides on the second mount surface 102a of the second arm 102. The second mount surface 102a of the second arm 102 restricts downward movement of the adaptor 200. The second vertical surface 102b of the second arm 102 and the shaft portion 161a of the second guide pin 161 restrict rearward movement of the adaptor 200. The head 161b of the second guide pin 161 restricts upward movement of the adaptor 200. Accordingly, the adaptor 200 can favorably move laterally between the first arm 101 and the second arm 102.

In this preferred embodiment, the adaptor 200 can be engaged with, and disengaged from, the first arm 101 and the second arm 102 from above by a method. This method will be described later.

Fixing of the adaptor 200 to the holder 100 is performed by using the first fixed portion 213 and the second fixed portion 214 of the adaptor 200 and the first fixing portion 130 and the second fixing portion 140 of the holder 100. The first fixing portion 130 is provided in the first arm 101. The first fixed portion 213 is provided in the side surface (front side surface) of the adaptor 200 toward the first arm 101. The second fixing portion 140 is provided in the second arm 102. The second fixed portion 214 is provided in the side surface (rear side surface) of the adaptor 200 toward the second arm 102. FIG. 11 is a horizontal cross-sectional view near the first cam member 131 in a state where the adaptor 200 is not fixed to the holder 100 (hereinafter referred to as a non-fixed state when necessary). In FIG. 11, the first fitting portion 110 is fitted in the first fitted portion 211, and the second fitting portion 120 is fitted in the second fitted portion 212. That is, the adaptor 200 is positioned. FIG. 12 is a horizontal cross-sectional view near the first cam member 131 in a state where the adaptor 200 is fixed to the holder 100 (hereinafter referred to as a fixed state when necessary). In FIGS. 11 and 12, the horizontal cross section passes through the boundary between the cam 131a and the operation portion 131c. In FIG. 11, the first cam member 131 is in a rotation position at which the front end of the stopper 131f faces right-forward. This rotation position will be hereinafter referred to as a second rotation position P2 when necessary. The second rotation position P2 is a rotation position of the first cam member 131 at which the adaptor 200 is not fixed to the holder 100 and is held movable laterally. The adaptor 200 is caused to slide laterally in a state where the first cam member 131 is in the second rotation position P2 and the second cam member 141 is in a similar second rotation position.

As illustrated in FIG. 11, in the second rotation position P2, the convex first contact portion 131a1 of the cam 131a faces rightward. The first fixed portion 213 of the adaptor 200 is located behind the cam 131a. A rear side surface of the cam 131a in the second rotation position P2 is in contact with the adaptor 200. As understood from FIG. 11, in this state, no portions of the cam 131a project over the first fixed portion 213 of the adaptor 200, and the adaptor 200 can be freely moved laterally. Although the cam 131a is in contact with the side surface of the adaptor 200, the cam 131a is moved forward by swing of the first swing member 133, and thus, does not hinder movement of the adaptor 200. Alternatively, the cam 131a in the second rotation position P2 may be separated from the adaptor 200.

As illustrated in FIG. 11, in the second rotation position P2, the pin 131e of the first cam member 131 is sandwiched between the front side surface of the first arm 101 and the rear surface of the first elastic member 132 and is present in the gap 130a. At this time, the pin 131e is sandwiched while slightly pushing and enlarging the gap 130a, and thus, is under an elastic force from the first elastic member 132. That is, the pin 131e is pushed against the front side surface of the first arm 101 by the first elastic member 132. In the second rotation position P2, movement of the first cam member 131 is restricted by the first elastic member 132. That is, in the second rotation position P2, the first cam member 131 also elastically deforms the first elastic member 132, and the first elastic member 132 holds the first cam member 131 in the second rotation position P2 by an elastic force. Accordingly, it is possible to prevent the first cam member 131 from freely moving and hindering insertion of the adaptor 200 while the adaptor 200 is not held.

In FIG. 12, the first cam member 131 rotates counterclockwise when seen from above in the state illustrated in FIG. 11 and is in the first rotation position P1. The state illustrated in FIG. 12 is the state in which the user rotates the first cam member 131 counterclockwise from the state illustrated in FIG. 11 . In the first rotation position P1, the front end of the stopper 131f faces right-rearward, and the stopper 131f is in contact with the adaptor 200. Thus, the first cam member 131 cannot rotate counterclockwise anymore. The first rotation position P1 is a position in which the first cam member 131 is rotated counterclockwise to the most extent in a movable range of the first cam member 131. As illustrated in FIG. 12, in the fixed state, the first contact portion 131a1 of the cam 131a is inserted in and in contact with the first recess 213a of the first fixed portion 213 of the adaptor 200. Specifically, the first contact portion 131a1 is in contact with the first pressed surface 213a1 of the first recess 213a. Here, the shapes of the first contact portion 131a1 and the first recess 213a correspond to each other so that the first contact portion 131a1 can be smoothly inserted in the first recess 213a.

As illustrated in FIG. 12, in the first rotation position P1, the first cam member 131 significantly elastically deforms the first elastic member 132 forward. In the first rotation position P1, the pin 131e of the first cam member 131 is located considerably at a forward position in the movable range, and the first elastic member is significantly elastically deformed. Accordingly, a relatively large elastic force is exerted on the first cam member 131 from the first elastic member 132. In this preferred embodiment, the first cam member 131 is supported by the first swing member 133 to be movable (swingable) between the first fixed portion 213 and the first elastic member 132, and presses the first fixed portion 213 under the elastic force of the first elastic member 132. At this time, the first fixed portion 213 receives a right-rearward pressing force F1. With this pressing force F1, the adaptor 200 is fixed to the holder 100. Similarly, in the second fixed portion 214 and the second fixing portion 140, the second fixed portion 214 receives a right-forward pressing force from the second fixing portion 140, and fixes the adaptor 200. When right-rearward pressing force generated by the first fixing portion 130 and right-forward pressing force generated by the second fixing portion 140 are applied together, longitudinal force components are substantially canceled, and only a rightward force is exerted on the adaptor 200. That is, the first fixing portion 130 is configured to press the first fixed portion 213 toward the coupling portion 103 along the Y axis (rightward) in the fixed state. The second fixing portion 140 is configured to press the second fixed portion 214 toward the coupling portion 103 along the Y axis (rightward) in the fixed state. In this embodiment, the direction of the resultant of pressing forces exerted on the adaptor 200 from the first fixed portion 213 and the second fixed portion 214 is only the rightward direction, but this resultant only needs to include at least a component toward the coupling portion 103, and does not need to be a force oriented only toward the coupling portion 103.

In the manner described above, the first and second fixing portions 130 and 140 include the first and second cam members 131 and 141, the first and second elastic members 132 and 142, and the first and second swing members 133 and 143, respectively. In the state where the first and second fitting portions 110 and 120 are fitted in the first and second fitted portions 211 and 212, when each of the first and second cam members 131 and 141 is located in the predetermined first rotation position P1, the first and second fixing portions 130 and 140 press the first and second fixed portions 213 and 214 and set the adaptor 200 in the fixed state. While the adaptor 200 is inserted, the first and second cam members 131 and 141 are disposed between the first and second fixed portions 213 and 214 and the first and second elastic members 132 and 142, respectively. In the first rotation position P1, the first and second cam members 131 and 141 contact the first and second fixed portions 213 and 214 and also contact the first and second elastic members 132 and 142 to elastically deform the first and second elastic members 132 and 142. At this time, the first and second elastic members 132 and 142 press the first and second cam members 131 and 141 toward the first and second fixed portions 213 and 214, respectively. The first and second swing members 133 and 143 respectively movably support the first and second cam members 131 and 141 between the first and second fixed portions 213 and 214 and the first and second elastic members 132 and 142 to thereby transfer elastic forces of the first and second elastic members 132 and 142 to the first and second fixed portions 213 and 214. With this mechanism, in the cutting machine 10 according to this preferred embodiment, the adaptor 200 can be easily attached to the holder 100 only by rotating the first and second cam members 131 and 141.

In the mechanism described above, the pressing force to the adaptor 200 is generated not by a force of the user for rotating the first and second cam members 131 and 141 but elastic forces of the first and second elastic members 132 and 142, and a stable fixing force can be obtained irrespective of forces of rotating the first and second cam members 131 and 141. In addition, since the first and second fixed portions 213 and 214 include the first and second recesses 213a and 214a, respectively, it can be visually and physically confirmed that the first and second cam members 131 and 141 are respectively inserted in the first and second recesses 213a and 214a and are set in the first rotation position P1. Furthermore, since a recess occupies a space smaller than a projection, the adaptor 200 can be made compact. As understood from FIG. 12, even when the adaptor 200 in the fixed state is to be pulled leftward, contact of the stoppers 131f and 141f (see FIG. 6) of the first and second cam members 131 and 141 with a side surface of the adaptor 200 prevents the pulling of the adaptor 200. For example, in the case of the first fixed portion 213 and the first fixing portion 130, when the adaptor 200 is to move leftward, a force that rotates the first cam member 131 counterclockwise is exerted on the first cam member 131. However, since the stopper 131f is in contact with the adaptor 200, the first cam member 131 does not rotate counterclockwise anymore. Accordingly, the adaptor 200 does not move leftward. That is, the fixed state of the adaptor 200 is not canceled unless an operation of rotating the first cam member 131 clockwise is performed.

The first and second cam members 131 and 141 of the holder 100 according to this preferred embodiment include the levers 131d and 141d (see FIG. 6) and are configured to easily rotate. The levers 131d and 141d configured to be gripped by the user in rotating the first and second cam members 131 and 141. In addition, in this preferred embodiment, the pins of the first and second cam members 131 and 141 are configured to elastically deform the first and second elastic members 132 and 142 in a rotation position other than the first rotation position, such as the second rotation position. The first and second elastic members 132 and 142 retain the first and second cam members 131 and 141 in the rotation position by elastic forces. Accordingly, it is possible to prevent the first and second cam members 131 and 141 from freely moving and hindering insertion of the adaptor 200 while the adaptor 200 is not held.

The first and second swing members 133 and 143 of the first and second fixing portions 130 and 140 according to this preferred embodiment move the first and second cam members 131 and 141 in order to transfer elastic forces of the first and second elastic members 132 and 142 to the first and second fixed portions 213 and 214 of the adaptor 200, respectively, but do not need to be swingable. The members only need to be movable members that movably hold the first and second cam members 131 and 141 between the first and second elastic members 132 and 142 and the first and second fixed portions 213 and 214 in the attached state, and the movement of the movable members may be sliding, for example. The swing member as described in this preferred embodiment, however, has advantages of simple mechanism and small space.

As an overall configuration of the holder 100 and the adaptor 200, in this preferred embodiment, the first and second guide projections 215 and 216 of the adaptor 200 are engaged with the first and second guide grooves 150 and 160 of the holder 100, and the adaptor 200 and the coupling portion 103 are positioned while being in contact with each other. In this configuration, the adaptor 200 is engaged with the holder 100 and slides. Thus, positioning can be easily performed. In addition, in this preferred embodiment, the adaptor 200 is fixed by pressing the first and second fixed portions 213 and 214 of the adaptor 200 toward the coupling portion 103. That is, the direction in which the adaptor 200 is to be pressed for positioning coincides with the direction in which the fixing portion presses the adaptor 200 in fixing. Accordingly, positioning is ensured by the fixing.

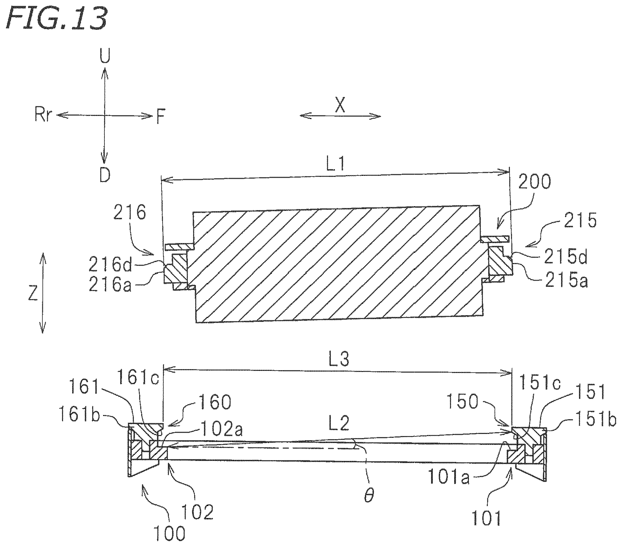

Next, a mechanism and a method for engaging the adaptor 200 with the guide grooves from above will be described. FIG. 13 is a vertical cross-sectional view illustrating the same section as FIG. 10, and is a view illustrating a state where the adaptor 200 is being engaged with the first and second guide grooves 150 and 160 from above. In FIG. 13, the first positioning pin 111, the second positioning pin 121, and other components are not shown. FIG. 13 is a cross-sectional view taken perpendicularly to the Y axis (left-right direction or lateral direction). As illustrated in FIG. 13, in the insertion from above, the adaptor 200 is tilted using the Y axis as an axis of tilt. In FIG. 13, the adaptor 200 is tilted such that at least a portion of the first outer side surface 215a is located above the second outer side surface 216a. That is, the adaptor 200 is tilted such that a front portion is high and a rear portion is low. In such a tilted state, the adaptor 200 can be engaged with the first guide groove 150 and the second guide groove 160 from above.

A length L1 in FIG. 13 is a distance between the first outer side surface 215a of the first guide projection 215 and the second outer side surface 216a of the second guide projection 216. That is, the length L1 is a longitudinal width of the adaptor 200 at the positions of the first guide projection 215 and the second guide projection 216. A length L2 in FIG. 13 is a distance between the upper edge of the first guide groove 150 (i.e., the upper edge of the first tapered surface 151c of the first guide pin 151) and the lower edge of the second guide groove 160 (i.e., the edge of the second mount surface 102a toward the first arm 101). The length L2 is a shortest distance between any edge of the second guide groove 160 extending along the Y axis other than the upper edge and the upper edge of the first guide groove 150. That is, the length L2 is a minimum distance of a diagonal line between the upper edge of the first guide groove 150 and any edge of the second guide groove 160. In this preferred embodiment, the length L2 is larger than the length L1.

Since the minimum distance L2 of the diagonal line between the upper edge of the first guide groove 150 and any edge of the second guide groove 160 is longer than the width L1 of the adaptor 200, when the adaptor 200 is tilted to a degree substantially equal to or greater than an angle θ in FIG. 13, the adaptor 200 can pass between the upper edge of the first guide groove 150 and the lower edge of the second guide groove 160. In this embodiment, the user first inserts the second guide projection 216 into the second guide groove 160 with the adaptor 200 being tilted downward to the rear and then gradually returns the adaptor 200 to the horizontal orientation. At this time, since the length L2 is larger than the length L1, the first guide projection 215 of the adaptor 200 can move downward without contacting the first arm 101, and is engaged with the first guide groove 150 at an angle close to the horizontal line. In this manner, the adaptor 200 can be engaged with the first guide groove 150 and the second guide groove 160 from above. With this attachment method, the adaptor 200 can be engaged from portions of the first arm 101 and the second arm 102 other than the front ends (left ends in this embodiment) thereof, and thus, the adaptor 200 can be more easily attached. In addition, a space for attaching the adaptor 200 is not needed in the front ends of the first arm 101 and the second arm 102.

Although the adaptor 200 is tilted such that the front portion is high and the rear portion is low in FIG. 13, the adaptor 200 may be tilted such that the front portion is low and the rear portion is high. In this embodiment, each of the adaptor 200 and the holder 100 is symmetric about the center line extending laterally, and the distance between the lower edge of the first guide groove 150 and the upper edge of the second guide groove 160 is also L2.

In the configuration of this preferred embodiment, the adaptor 200 cannot be attached to the holder 100 while being kept horizontally. A length L3 in FIG. 13 is a distance between an upper edge of the first guide groove 150 and an upper edge of the second guide groove 160. That is, the L3 is a width of an opening in which the adaptor 200 is inserted from above. The width L3 of the opening is smaller than the width L1 of the adaptor 200. Thus, the adaptor 200 cannot be attached to the holder 100 while being kept horizontal. However, after engagement of the adaptor 200, since the width L3 of the opening is smaller than the width L1 of the adaptor 200, upward movement of the adaptor 200 is restricted so that the engaged state is stabilized. With this configuration, the adaptor 200 can be engaged from portions other than the front ends of the first arm 101 and the second arm 102 so that the adaptor 200 can be easily engaged. In addition, the adaptor 200 can be moved stably after the engagement.

In this preferred embodiment, to further ease the engagement of the adaptor 200, the first guide projection 215 and the second guide projection 216 are provided with the first chamfering 215d and the second chamfering 216d, respectively. The first chamfering 215d further eases oblique insertion of the first guide projection 215 in the first guide groove 150. The second chamfering 216d further eases oblique insertion of the second guide projection 216 in the second guide groove 160. Similarly, the lower surface of the head 151b of the first guide pin 151 forming the first guide groove 150 is a first tapered surface 151c. The first tapered surface 151c has a slope corresponding to the first chamfering 215d of the first guide projection 215. Accordingly, the first guide projection 215 can be more easily obliquely inserted in the first guide groove 150. The lower surface of the head 161b of the second guide pin 161 forming the second guide groove 160 is a second tapered surface 161c. The second tapered surface 161c has a slope corresponding to the second chamfering 216d of the second guide projection 216. Accordingly, the second guide projection 216 can be more easily obliquely inserted in the second guide groove 160.

In this preferred embodiment, the distance between the upper edge of the first guide groove 150 and the lower edge of the second guide groove 160 is a minimum distance between any edge of the second guide groove 160 other than the upper edge of the second guide groove 160 and the upper edge of the first guide groove 150. However, the minimum distance is not limited to the above-described distance. For example, a step may be provided in the second guide groove 160, and the distance between an edge of the step and the upper edge of the first guide groove 150 may be the minimum distance. In any case, if the adaptor 200 can pass through the minimum distance, the adaptor 200 can pass through other portions, and thus, the minimum distance may be a distance between the upper edge of the first guide groove 150 and any portion of the second guide groove 160.

The foregoing description has been directed to the cutting machine according to one preferred embodiment. The foregoing preferred embodiment is merely a preferred example, and is not intended to limit the cutting machine disclosed here. For example, in the preferred embodiment described above, the guide mechanisms with which the adaptor 200 is engaged in the first arm 101 and the second arm 102 are the first guide groove 150 and the second guide groove 160. In addition, the guides that are engaged with the first guide groove 150 and the second guide groove 160 in the adaptor 200 are the first guide projection 215 and the second guide projection 216. However, this is not restrictive. For example, the guide mechanisms in the arms may be projections and the guides in the adaptors may be grooves. The guide mechanisms are not necessarily disposed inside the arms, and may be disposed at various locations, such as outside, below, or above, of the arms. The guides only need to have such mechanisms as to correspond to the location of the guide mechanisms. The guide mechanisms and the guides for engaging the adaptor 200 with the first arm 101 and the second arm 102 are not limited to specific embodiments.

In the preferred embodiment described above, the two fitted portions of the adaptor 200 have recesses, and the two fitting portions of the holder 100 have projections. Alternatively, the two fitted portions of the adaptor 200 may have projections, and the two fitting portions of the holder 100 may have recesses. The number of fitted portions of the adaptor 200 and the number of fitting portions of the holder 100 are not limited to two, and may be one, or three or more. In the preferred embodiment described above, two fixed portions of the adaptor 200 include recesses, and the two fixing portions of the holder 100 are inserted in the recesses. However, a different structure may be employed. The number of fixed portions of the adaptor 200 and the number of fixing portions of the holder 100 are not limited to two, and may be one or more, or three or more.

The mechanism with which the adaptor holds the cutting object is not limited to a specific embodiment. In the preferred embodiment described above, the disc-shaped cutting object is sandwiched and fixed. However, such a mechanism is not necessarily employed. For example, the cutting object may be held by a member such a clamp to be fixed to the adaptor.

Furthermore, in the preferred embodiment described above, the tool 8 is moved along the Y axis and the Z axis, and the cutting object 5 is moved along the X axis and is rotated in the two directions of the direction T1 and the direction T2. However, the positional relationship between the tool 8 and the cutting object 5 is a relative relationship, and it is not defined which one of the tool 8 and the cutting object 5 is moved and the way of movement is not limited.

The cutting machine is not limited to a specific mechanical configuration. For example, the cutting machine may include a dust collecting device that collects dust generated by a cutting process. The cutting machine is of a dry type in the preferred embodiment, but may be of a wet type using a coolant, for example.

## Claims

1. A cutting machine (10) comprising:
an adaptor (200) that holds a cutting object (5); and
a holder (100) that detachably holds the adaptor (200), wherein
the adaptor (200) includes
a fitted portion (211,212), and
a fixed portion (213,214),
the holder (100) includes
a fitting portion (110,120) that is fitted in the fitted portion (211,212) and positions the adaptor (200) and the holder (100), and
a fixing portion (130,140) including a cam member (131,141), an elastic member (132,142), and a movable member (133,143), the fixing portion (130,140) being configured to press the fixed portion (213,214) to set the adaptor (200) in a fixed state when the cam member (131,141) is in a first rotation position (P1) in a state where the fitting portion (110,120) is fitted in the fitted portion (211,212), and
in the state where the fitting portion (110,120) is fitted in the fitted portion (211,212),
the cam member (131,141) is disposed between the fixed portion (213,214) and the elastic member (132,142), and in the first rotation position (P1), contacts the fixed portion (213,214) and contacts the elastic member (132,142) to elastically deform the elastic member,
when the cam member is in the first rotation position (P1), the elastic member (132,142) presses the cam member (131,141) toward the fixed portion (213,214), and
the movable member (133,143) supports the cam member (131,141) such that the cam member (131,141) is movable between the fixed portion (213,214) and the elastic member (132,142).

2. The cutting machine (10) according to claim 1, wherein
when the cam member (131,141) is in a second rotation position (P2) other than the first rotation position (P1), the cam member (131,141) elastically deforms the elastic member (132,142), and the elastic member (132,142) holds the cam member (131,141) in the second rotation position (P2) by an elastic force.

3. The cutting machine (10) according to claim 1 or 2, wherein
the cam member (131,141) includes a lever (131d,141d) configured to be gripped for rotation.

4. The cutting machine (10) according to any one of claims 1 to 3, wherein
the fixed portion (213,214) includes a recess (213a,214a), and
the cam member (131,141) is configured to be at least partially inserted in the recess (213a,214a) and contact the recess (213a,214a) in the fixed state.

5. The cutting machine (10) according to any one of claims 1 to 4, wherein
the movable member (133,143) includes a swing member (133,143) that supports the cam member (131,141) at one end and is rotatably supported at another end.

6. The cutting machine (10) according to any one of claims 1 to 5, wherein
the holder (100) includes
a first arm (101) extending along a first axis (Y),
a second arm (102) extending along the first axis (Y) in parallel with the first arm (101), and
a coupling portion (103) extending along a second axis (X) and coupling the first arm (101) and the second arm (102) to each other, the second axis (X) being orthogonal to the first axis (Y),
the first arm (101) includes a first guide mechanism (150) extending along the first axis (Y),
the second arm (102) includes a second guide mechanism (160) extending along the first axis (Y),
the adaptor (200) has a flat plate shape, and includes a first guide (215) that is engaged with the first guide mechanism (150), and a second guide (216) that is engaged with the second guide mechanism (160), the adaptor (200) being configured to be engaged with the first guide mechanism (150) and the second guide mechanism (160) to be movable along the first axis (Y),
the fitted portion (211,212) is provided in a side surface of the adaptor (200) toward the coupling portion (103),
the fitting portion (110,120) is provided in the coupling portion (103), and is configured to be fitted in the fitted portion (211,212) when the adaptor (200) is engaged with the first guide mechanism (150) and the second guide mechanism (160) to contact the coupling portion (103),
the fixing portion (130,140) includes a first fixing portion (130) provided in the first arm (101) and a second fixing portion (140) provided in the second arm (102),
the fixed portion (213,214) includes a first fixed portion (213) provided in a side surface of the adaptor (200) toward the first arm (101) and a second fixed portion (214) provided in a side surface of the adaptor (200) toward the second arm (102),
the first fixing portion (130) is configured to press the first fixed portion (213) toward the coupling portion (103) along the first axis (Y) in the fixed state, and
the second fixing portion (140) is configured to press the second fixed portion (214) toward the coupling portion (103) along the first axis (Y) in the fixed state.

7. The cutting machine (10) according to claim 6, wherein
the first guide mechanism (150) includes a first guide groove (150) facing toward the second arm (102),
the second guide mechanism (160) includes a second guide groove facing (160) toward the first arm (101),
the adaptor (200) is configured to be engaged with the first guide groove (150) and the second guide groove (160) while being inserted between the first arm (101) and the second arm (102),
the first guide (215) includes a first guide projection (215) provided on a side surface of the adaptor (200) toward the first guide groove (150) and is engaged with the first guide groove (150), and
the second guide (216) includes a second guide projection (216) that is provided on a side surface of the adaptor (200) toward the second guide groove (160) and is engaged with the second guide groove (160).

8. The cutting machine (10) according to claim 7, wherein
the first guide projection (215) includes a first outer side surface (215a) facing toward the first guide groove (150),
the second guide projection (216) includes a second outer side surface (216a) facing toward the second guide groove (160),
suppose a side along a third axis (Z) orthogonal to the first axis (Y) and the second axis (X) is a Z1 side,
a distance between an edge of the first guide groove (150) at the Z1 side and an edge of the second guide groove (160) at the Z1 side is smaller than a distance between the first outer side surface (215a) and the second outer side surface (216a), and
a minimum distance between any edge of the second guide groove (160) extending along the first axis (Y) other than the edge at the Z1 side and the edge of the first guide groove (150) at the Z1 side is longer than the distance between the first outer side surface (215a) and the second outer side surface 216a), and
the adaptor (200) is configured to be engaged in the first guide groove (150) and the second guide groove (160) from the Z1 side by tilting the adaptor (200) about the first axis (Y) such that at least a portion of the first outer side surface (215a) is located closer to the Z1 side than the second outer side surface (216a) is.
